# EUROPÄISCHE PATENTSCHRIFT

(11) **EP 0 958 211 B1**
(45) Veröffentlichungstag und Bekanntmachung des Hinweises auf die Patenterteilung: **05.06.2002**
(21) Anmeldenummer: 98906836.6
(22) Anmeldetag: 23.01.1998
(51) Int. Cl.: B65G 43/08, B23Q 7/14

(54) **TRANSPORTSYSTEM**
TRANSPORT SYSTEM
SYSTEME DE TRANSPORT

(30) Priorität: 06.02.1997 DE 19704441
(43) Veröffentlichungstag der Anmeldung: 24.11.1999
(73) Patentinhaber: ROBERT BOSCH GMBH, 70442 Stuttgart (DE)
(72) Erfinder: LEISNER, Ernst, D-71638 Ludwigsburg (DE)
(86) Internationale Anmeldenummer: DE9800203
(87) Internationale Veröffentlichungsnummer: WO9834858

(56) Entgegenhaltungen:
- EP-A- 0 439 680
- DE-A- 4 039 265
- US-A- 5 109 974
- PATENT ABSTRACTS OF JAPAN vol. 008, no. 146 (M-307), 7.Juli 1984 & JP 59 043716 A (NIPPON KOKAN KK), 10.März 1984,

## Beschreibung

### Stand der Technik

Die Erfindung betrifft ein Transportsystem entsprechend dem Anspruch 1. Aus der DE 40 39 265 C2 ist ein Transportsystem bekannt, bei dem das Zu- und/oder Abführen von Werkstückträgern an Bearbeitungseinheiten mit Hilfe eines Taktförderers durchgeführt wird. Das Förderband des Taktförderers ist durch Nocken in Segmente eingeteilt, in denen Werkstückträger angeordnet sind. In den Segmenten vor bzw. nach der Bearbeitungseinheit befinden sich Werkstückträger mit unbearbeiteten bzw. bearbeiteten Teilen und/oder Baugruppen. Das Fördern erfolgt gemäß einem sich mit jedem Takt wiederholenden Geschwindigkeitsprofil. Es dient der Erhöhung des Durchsatzes an Werkstückträgern. Ein Geschwindigkeitsprofil lässt sich z. B. in einem Geschwindigkeits-Weg-Diagramm oder Geschwindigkeits-Zeit-Diagramm darstellen. Ausgehend von der Geschwindigkeit Null steigt die Geschwindigkeit des Taktförderers auf einen bestimmten Wert an und geht wieder auf Null zurück. Das Geschwindigkeitsprofil für den Taktförderer wird von einem Frequenzumrichter, einem gebremsten Drehstrommotor, einem Schneckengetriebe und einem Scheibenkurvengetriebe erzeugt. Mit dem Frequenzumrichter wird der gebremste Drehstrommotor mit verschiedenen, jedoch jeweils konstanten Drehzahlen betrieben. Das Schneckengetriebe wandelt die Drehzahl des Drehstrommotors in eine niedrigere Abtriebsdrehzahl um. Solch ein Getriebe ist bei allen Transportsystemen, die Drehstrommotoren verwenden, notwendig, da die Drehzahlen eines Drehstrommotors relativ hoch sind. Erst das Scheibenkurvengetriebe wandelt die konstante Abtriebsdrehzahl des Schneckengetriebes in eine Antriebsdrehzahl für den Taktförderer um, die direkt proportional zum Geschwindigkeitsprofil ist.

Während des Bearbeitungszyklus steht der Taktförderer still. Er fördert nur dann, wenn das Bearbeitungsende erreicht und der Auslauf leer ist. Ist jedoch nach der Bearbeitung kein Werkstückträger im Einlauf, führt dies auf jeden Fall zu Nachteilen. Entweder fördert der Taktförderer ein leeres Segment, wodurch dann in der Bearbeitungseinheit die Teile und/oder Baugruppen eines nicht vorhandenen Werkstückträgers bearbeitet werden oder der Taktförderer steht, weil er auf einen unbearbeiteten Werkstückträger wartet. In dieser Zeit erfolgt keine Abgabe von Werkstückträgern. Im Werkstückträgerdurchsatz ist eine Lücke entstanden, die nicht mehr aufgeholt werden kann.

Die Verwendung des Prinzips des Taktförderers auf dem gesamten Transportsystem einschließlich Hauptförderstrecke und Zubring- bzw. Abführförderbahn würde bedeuten, dass die einzelnen Bearbeitungseinheiten nicht mehr zu einem flexiblen Transfersystem verbunden sondern fest miteinander verkettet wären. Dies liegt daran, weil in diesem Fall die Werkstückträger zwischen Nocken bzw. in Segmenten eingeschlossen wären und somit nicht mehr flexibel transportiert werden könnten.

Desweiteren ist die Länge des Taktförderers ein ganzzahliges Vielfaches der Länge eines Segments wodurch die Länge des Taktförderers nicht sehr variabel gestaltbar ist.

Außer dem bekannten Transportsystem gibt es noch weitere, die, um einen höheren Werkstückträgerdurchsatz zu erhalten, mit höherer Förderbahngeschwindigkeit arbeiten. Dies führt jedoch zu dem Nachteil, dass Werkstückträger mit der entsprechend höheren Geschwindigkeit auf Stopper oder stehende Werkstückträger aufprallen. Deshalb sind Dämpfer oder zusätzliche Zeiten zur Beruhigung des Werkstückträgers nötig, was wiederum Verzögerungen zur Folge hat.

Ferner ist aus der JP 59043716 A ein Verfahren zur Erzeugung eines Geschwindigkeitsprofiles bei einem Stauförderer bekannt, das ausgehend von einem Geschwindigkeitswert ungleich Null mindestens einen anderen Wert und dann wieder den Grundwert annimmt. Es werden jedoch keine Hinweise gegeben, wie ein fester Taktzyklus vermieden werden kann.

### Vorteile der Erfindung

Das erfindungsgemäße Transportsystem mit den Merkmalen des Anspruchs 1 hat demgegenüber den Vorteil, daß auch während der Bearbeitung Werkstückträger gefördert werden können. Falls kein Werkstückträger im Einlauf ist, kann immer noch ein Werkstückträger mit bearbeiteten Teilen und/oder Baugruppen abtransportiert werden. Da sich in der Regel jedoch immer mehrere Werkstückträger vor der Bearbeitungseinheit befinden, können, auch wenn längere Zeit kein neuer Werkstückträger im Einlauf ankommt, die Teile und/oder Baugruppen der vorhandenen Werkstückträger bearbeitet und die Werkstückträger danach abgegeben werden.

Ein wichtiger Vorteil des erfindungsgemäßen Transportsystems ist, daß es nicht nur auf Bearbeitungseinheiten sondern auch anderen Übergabestellen wie zum Beispiel Knotenstellen anwendbar ist, wodurch die Zeit beim Übergeben eines Werkstückträgers von einer Förderbahn auf eine andere beträchtlich reduziert wird; dies unter Beibehaltung der Flexibilität des Transportsystems.

Als weiterer Vorteil ist anzusehen, daß das Geschwindigkeitsprofil zum Fördern der Werkstückträger beliebig einstellbar ist, da es nicht durch ein Scheibenkurvengetriebe erzeugt wird, sondern durch ein elektronisches Steuergerät, z. B. einen Frequenzumrichter. Dadurch können an verschiedene Situationen angepaßte Geschwindigkeitsprofile eingestellt werden. Beispielsweise kann in einer entsprechenden Situation beim Abführen eines Werkstückträgers aus einer Knotenstelle zuerst eine höhere Geschwindigkeit gefahren werden, die dann über eine längere Strecke beibehalten wird. Beim Annähern an einen Vereinzeler kann die Geschwindigkeit reduziert werden, so daß der Werkstückträger fast stoßfrei an den Vereinzeler fährt. Kurz nach dem Vereinzeler kann eine Bearbeitungseinheit folgen. Für diese kürzere Strecke wird dann der Werkstückträger mit einem weiteren, der Strecke angepaßten, Geschwindigkeitsprofil transportiert.

Gegenüber dem Stand der Technik sind weder Scheibenkurvengetriebe noch Bremse vorhanden, deshalb entfallen auch die entsprechenden Kosten.
Da die Länge der Förderbahn nicht von Segmentlängen abhängt, ist sie sehr variabel gestaltbar.
Weitere Vorteile und vorteilhafte Weiterbildungen des erfindungsgemäßen Transportsystems/Verfahrens ergeben sich aus den Unteransprüchen und der Beschreibung.

### Zeichnung

Ein Ausführungsbeispiel der Erfindung ist in der Zeichnung dargestellt und in der nachfolgenden Beschreibung näher erläutert. Es zeigen in schematischer Darstellung Figur 1 das Transportsystem als einen Ausschnitt eines Transfersystems in einer Draufsicht, Figur 2 einen vereinfachten Anschlußplan des Transportsystems, Figuren 3a bis 3c den Verlauf der in einem Frequenzumrichter vorkommenden Spannungen U über der Zeit t, Figur 4a Signale von Signalgebern über dem Weg s und Figur 4b die Geschwindigkeiten v und Δv eines Geschwindigkeitsprofil über dem Weg s.

### Beschreibung des Ausführungsbeispiels

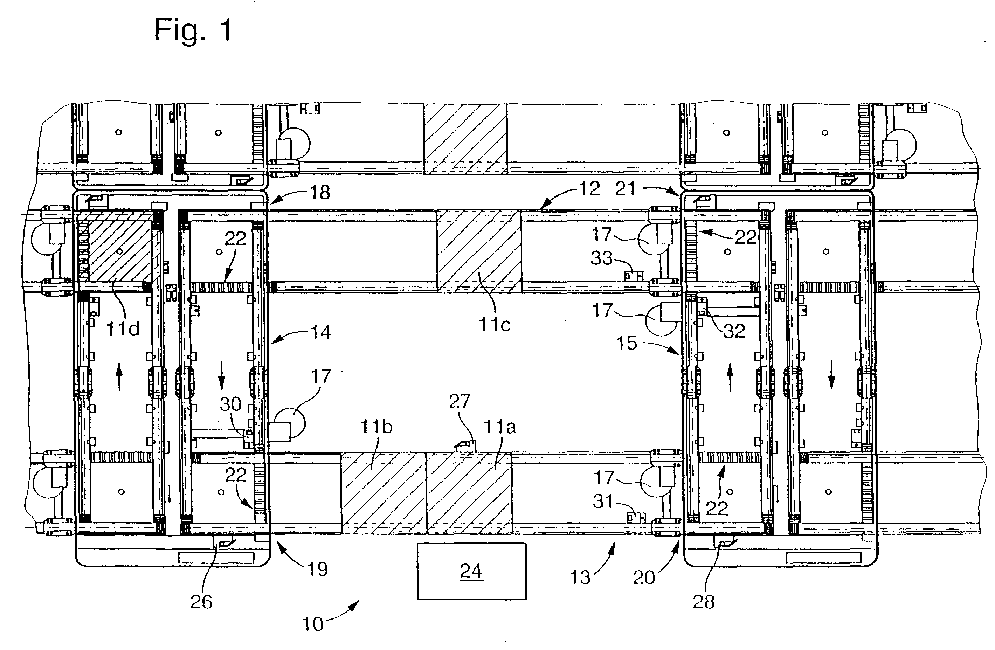

Figur 1 zeigt ein Transportsystem 10 zum Fördern von Fördergut insbesondere Werkstückträgern 11. Parallel zu einer Hauptförderbahn 12 ist in einem Abstand eine Nebenförderbahn 13 angeordnet. Sowohl die Hauptförderbahn 12 als auch die Nebenförderbahn 13 weisen die gleiche Förderrichtung auf. Sie sind verbunden mit einer Zubringförderbahn 14 und einer Abführförderbahn 15, die rechtwinklig zur Hauptförderbahn 12 und zur Nebenförderbahn 13 angeordnet sind. Sie weisen gegensinnige Förderrichtungen auf. Jede Förderbahn 12 bis 15 hat einen eigenen Fördermittelantrieb 17 bestehend aus einem Drehstrommotor und einem Schneckengetriebe. Alle Förderbahnen 12 bis 15 sind Doppelgurtförderer, deren Aufbau und Wirkungsweise allgemein bekannt sind. In Knotenstellen 18 bis 21, den jeweiligen Überlappungsbereichen der Förderbahnen 12 bis 15, ist je eine Quertransporteinheit 22 angeordnet. Sie transportiert Werkstückträger 11 von einer Förderbahn auf eine andere. Im Bereich der Nebenförderbahn 13 befindet sich eine Bearbeitungseinheit 24 zum Bearbeiten, Prüfen oder Montieren. Die Knotenstellen 18 bis 21 und die Bearbeitungseinheit 24 stellen Übergabestellen dar, an denen Werkstückträger von einer Förderbahn auf eine andere Förderbahn, von einer Förderbahn an die Bearbeitungseinheit oder von der Bearbeitungseinheit an eine Förderbahn übergeben werden. Mehrere Transportsysteme 10 können zu einem flexiblen Transfersystem zusammengefügt werden, an dem hintereinander zum Beispiel aus Einzelteilen Baugruppen montiert und geprüft werden. Hierfür werden mehrere Transportsysteme 10 mit den entsprechenden Bearbeitungseinheiten 24 an den Knotenstellen 18 bzw. 22 aneinandergereiht. Entlang der Nebenförderbahn 13 sind in der Knotenstelle 19 ein erster Signalgeber 26, an der Bearbeitungseinheit 24 ein zweiter Signalgeber 27 und an der Knotenstelle 20 ein dritter Signalgeber 28 angeordnet. Vor der Knotenstelle 19 bzw. 20 ist ein Vereinzeler 30 bzw. 31 angeordnet. Vor der Knotenstelle 22 ist auf der Abführförderbahn 15 ein Vereinzeler 32 und auf der Hauptförderbahn 12 ein Vereinzeler 33 angebracht. Vereinzeler dienen zum Anhalten von Werkstückträgern. Hierzu hat ein Vereinzeler eine ein- und ausfahrbare Anhalteeinrichtung. Zur Abfrage, ob ein Werkstückträger an einem Vereinzeler steht oder diesen passiert, ist in dem Vereinzeler ein Signalgeber integriert.

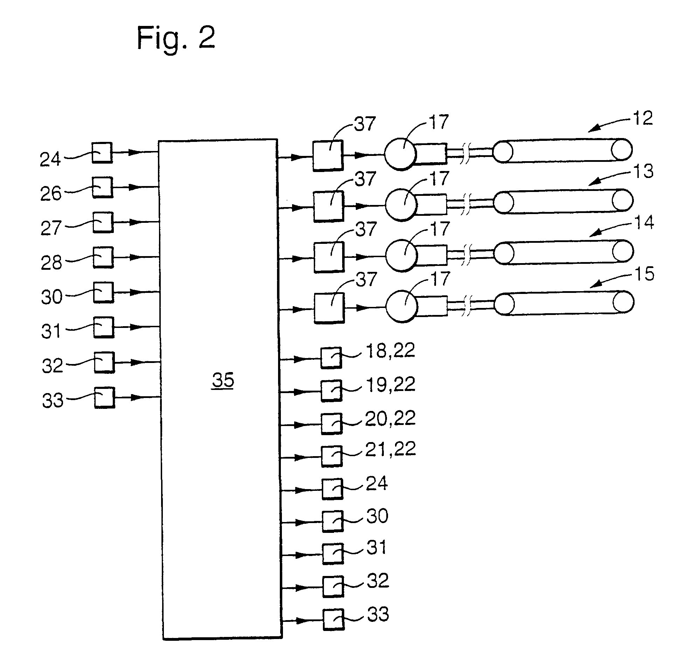

In der Figur 2 sind die Signalgeber 26 bis 28, die in den Vereinzelern 30 bis 33 integrierten Signalgeber und die Bearbeitungseinheit 24 mit den Eingängen einer speicherprogrammierbaren Steuerung 35, im folgenden SPS 35 genannt, verbunden. An die Ausgänge der SPS 35 sind vier Frequenzumrichter 37 angeschlossen, welche mit den Drehstrommotoren der Fördermittelantriebe 17 der Förderbahnen 12 bis 15 verbunden sind. Weiterhin sind an den Ausgängen der SPS 35 die Quertransporteinheiten 22 der Knotenstellen 18 bis 21, die Bearbeitungseinheit 24 und die Anhalteeinrichtungen der Vereinzeler 30 bis 33 angeschlossen. Somit steuert die SPS 35 das gesamte Transportsystem 10.

Eine SPS hat mehrere Eingänge bzw. Ausgänge für Eingangssignale bzw. Ausgangssignale. Mit einem im dortigen Speicher abgelegten Programm, das in der Regel aus UND- bzw. ODER-Verknüpfungen besteht, werden Eingangssignale, gegebenenfalls zeitlich verzögert, zu Ausgangssignalen verarbeitet.

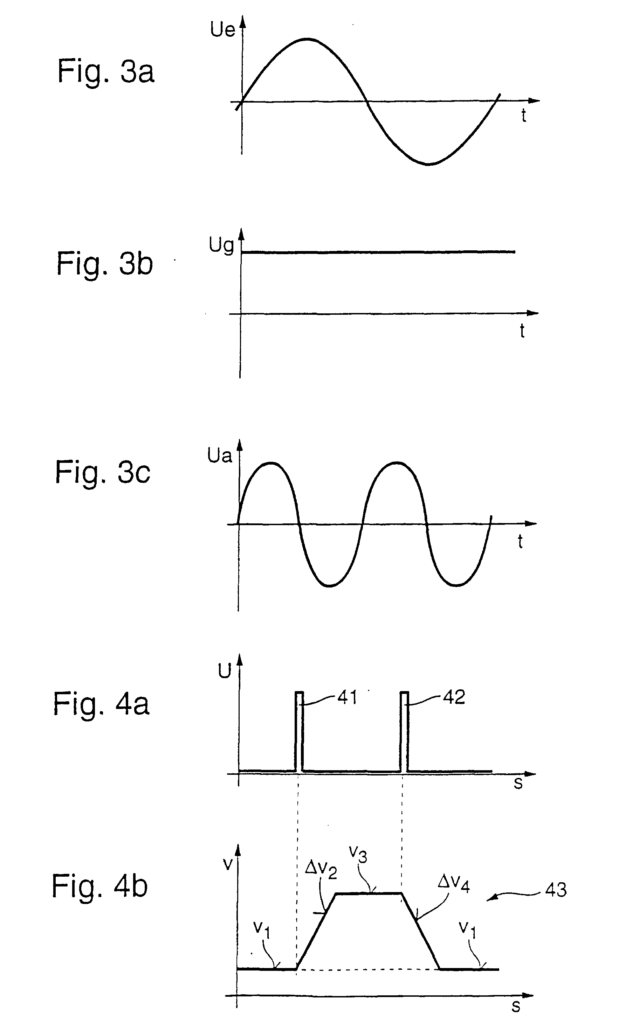

Die Figuren 3a bis 3c zeigen die Wirkungsweise eines Frequenzumrichters anhand einer Einphasen-Wechselspannung. Eine Eingangsspannung Uₑ, zum Beispiel aus dem Stromversorgungsnetz wird zu einer Gleichspannung Ug und dann in eine Ausgangsspannung Uₐ mit einstellbarer Frequenz umgewandelt. Die entsprechenden Schritte sind in den Figuren 3a bis 3c als Verlauf der jeweiligen Spannung über der Zeit t dargestellt. Mit der Ausgangsspannung Uₐ kann dann ein entsprechender Elektromotor drehzahlgeregelt betrieben werden. Für das Drehstromnetz mit drei Phasen gilt das gleiche Prinzip, mit dem Unterschied, daß ein Drehstrommotor angeschlossen wird. Die Frequenz der Ausgangsspannung Uₐ kann manuell oder zum Beispiel mit Hilfe einer SPS eingestellt werden. Eine Frequenzerhöhung oder Frequenzerniedrigung kann sprungartig oder allmählich erfolgen.

Figur 4a zeigt zwei Signale 41 und 42 in einem Spannungs-Weg-Diagramm. In der Figur 4b ist ein Geschwindigkeitsprofil 43 mit seinen einzelnen Geschwindigkeiten v in einem Geschwindigkeits-Weg-Diagramm dargestellt. Zuerst entspricht die Geschwindigkeit einer Grundgeschwindigkeit v₁ von 12m/min. Dann steigt die Geschwindigkeit entlang einer Steigung Δv₂ auf einen Wert v₃ von 42m/min an. Anschließend fällt die Geschwindigkeit entlang einer Steigung Δv₄ wieder auf die Grundgeschwindigkeit v₁ ab. Die einzelnen Geschwindigkeiten v entsprechen den Geschwindigkeiten der Förderbahnen 12 bis 15. Die Förderbahnen 12 bis 15 werden von den Fördermittelantrieben 17 angetrieben, welche wiederum von den Frequenzumrichtern 37 gesteuert werden. Somit sind die Geschwindigkeiten v proportional zu den von den Frequenzumrichtern erzeugten Frequenzen. Deshalb sind auch die Steigungen Δv₂ und Δv₄ proportional zu den Frequenzerhöhungen oder Frequenzerniedrigungen der Frequenzumrichter 37. Δv₂ und Δv₄ werden durch die Signale 41 und 42 ausgelöst. Die Signale 41 und 42 werden von der SPS 35 erzeugt.

Im folgenden wird die Wirkungsweise des erfindungsgemäßen Transportsystems 10 mit Hilfe der Figuren 1, 4a und 4b erläutert. Beispielsweise steht an der Bearbeitungseinheit 24 ein Werkstückträger 11a. Ein Werkstückträger 11b befindet sich direkt dahinter. Nach Bearbeitungsende transportiert die Nebenförderbahn 13 den Werkstückträger 11a weiter und den Werkstückträger 11b an die Bearbeitungseinheit 24. Während der Zeit, die nötig ist, um den Werkstückträger 11a an der Bearbeitungseinheit 24 durch den Werkstückträger 11b zu ersetzen, im folgenden auch Wechselzeit genannt, erfolgt keine Bearbeitung. Bei der Grundgeschwindigkeit v₁ von 12m/min und einer Werkstückträgerlänge von 320mm beträgt die Wechselzeit mindestens 1,6s, da direkt hinter dem Werkstückträger 11a der Werkstückträger 11b wartet. Wird entsprechend eine Knotenstelle durchfahren, dauert die Wechselzeit aufgrund der Längs- und Querbewegungen der Werkstückträger 11a und 11b doppelt so lange, also 3,2s. Um nun diese Zeit zu reduzieren und die im Stand der Technik genannten Nachteile zu umgehen, geschieht folgender Ablauf. Der SPS 35 wird von der Bearbeitungseinheit 24 das Bearbeitungsende gemeldet. Die Grundgeschwindigkeit v₁ der Nebenförderbahn 13 wird dann durch das Signal 41 der SPS 35 kontinuierlich mit Δv₂ auf die Geschwindigkeit v₃ erhöht. Erreicht der Werkstückträger 11a den Signalgeber 27, gibt dieser ein Signal an die SPS 35. Diese löst das Signal 42 aus, wodurch die Geschwindigkeit v₃ kontinuierlich mit Δv₄ auf die Grundgeschwindigkeit v₁ abgebremst wird. Der Werkstückträger 11b kommt prallfrei an der Bearbeitungseinheit 24 an. Hiermit lassen sich ca. 0,9s der 1,6s beim Werkstückträgerwechsel sparen, was einer Zeitersparnis von ca. 56% entspricht.

Hat der Werkstückträger 11b die Position an der Bearbeitungseinheit 24 erreicht, kann von der SPS 35 wieder die höhere Geschwindigkeit v₃ ausgelöst werden, und zwar so lange, bis der Werkstückträger 11a den Signalgeber des Vereinzelers 31 erreicht. Dann wird die Nebenförderbahn 13 zum Beispiel zeitverzögert abgebremst, so daß der Werkstückträger 11a prallfrei in die Knotenstelle 20 einläuft. Ein zeitverzögertes Abbremsen ist möglich, da man die Geschwindigkeit v₃ der Nebenförderbahn 13, die zurückzulegende Strecke in der Knotenstelle 20 kennt und somit den Wert für Δv₄ berechnen kann. Die Quertransporteinheit 22 der Knotenstelle 20 wird nun von der SPS 35 aktiviert und der Werkstückträger 11a wird auf die Abführförderbahn 15 gebracht. Diese wird dann auf die hohe Geschwindigkeit v₃ beschleunigt. Somit läßt sich ein Knoten statt in 3,2 Sekunden in 1,4 Sekunden durchfahren. Wird der Signalgeber des Vereinzelers 32 vor der Knotenstelle 21 erreicht, wird die Abführförderbahn 15 zeitverzögert so abgebremst, daß der Werkstückträger 11a -wiederum prallfrei- in die Knotenstelle 21 fährt. Anschließend verläßt der Werkstückträger 11a das Transportsystem 10. Da auf der Hauptförderbahn 12 ein weiterer Werkstückträger 11c zur Knotenstelle 21 transportiert wird, ist zur Vermeidung einer Kollision auf der Hauptförderbahn 12 vor der Knotenstelle 21 der Vereinzeler 33 angebracht.

Im angenommenen Fall ist zu Beginn der Bearbeitung des Werkstückträgers 11b noch kein weiterer Werkstückträger 11d in direktem Anschluß auf der Nebenförderbahn 13 gefolgt. Während der laufenden Bearbeitung könnte jedoch dieser Werkstückträger 11d nachrücken, da die Zubringförderbahn 14 und insbesondere die Nebenförderbahn 13 nie stillstehen. Wenn die Bearbeitung noch nicht als beendet gemeldet wurde, können die Zubringförderbahn 14 und die Nebenförderbahn 13 mit der höheren Geschwindigkeit v₃ betrieben werden, sodaß der Werkstückträger 11d mit möglichst geringem Zeitverlust und dennoch prallfrei durch die Knotenstellen 18 bzw. 19 und an die Bearbeitungseinheit 24 gefördert werden kann. Durch den Signalgeber des Vereinzelers 30 wird die Zubringförderbahn 14 entsprechend abgebremst, wenn der Werkstückträger 11d an der Knotenstelle 19 ankommt. Durch den Signalgeber 26 wird dann die Geschwindigkeit der Nebenförderbahn 13 beschleunigt und durch den Signalgeber 27 wieder abgebremst.

Für das erfindungsgemäße Transportsystem 10 sollten Gurtund das Werkstückträgermaterial einen hohen Reibwert haben. Beim Gurtmaterial läßt sich dies beispielsweise durch unbeschichtetes Gurtmaterial erreichen. Die Steigungen Δv₂ und Δv₄ müssen so eingestellt werden, daß die Werkstückträger 11 auf den Förderbahnen 12 bis 14 möglichst schlupffrei gefördert werden. Entsprechende Werte für die Steigungen können in Versuchen ermittelt werden.

Statt die Geschwindigkeit einer Förderbahn von einem Grundwert auf einen höheren Wert zu bringen, wäre auch denkbar, daß die Geschwindigkeit von ihrem Grundwert aus einen niedrigeren Wert und dann wieder den in diesem Fall höheren Wert annimmt.

Zwar ist die Verwendung einer SPS bei Transportsystemen üblich, da eine SPS auf einfache Weise umprogrammiert werden kann. Dadurch kann das Transportsystem auf unterschiedliche Aufgaben, wie z. B. Montieren oder Prüfen, eingestellt werden. Allerdings könnten die Signalgeber auch direkt an die Frequenzumrichter angeschlossen werden, wenn das Transportsystem nur für eine Aufgabe vorgesehen ist.

Als Förderemittelantrieb 17 wäre statt eines Drehstrommotors mit Schneckengetriebe auch der Einsatz eines elektrischen oder hydraulischen Servoantriebs denkbar.

## Patentansprüche

1. Transportsystem (10) zum Zu- und/oder Abführen von mindestens einem Werkstückträger (11) an mindestens einer Übergabestelle (18 bis 21, 24) mittels mindestens eines als Förderbahn ausgebildeten Fördermittels (12 bis 15), insbesondere einem Gurtbandförderer (12 bis 15), mit mindestens einem Fördermittelantrieb (17), wobei einem Fördermittel (12 bis 15) jeweils ein Fördermittelantrieb (17) zugeordnet ist, wobei mindestens ein elektronisches Steuergerät (37) für den mindestens einen Fördermittelantrieb (17) wenigstens ein Geschwindigkeitsprofil (43) erzeugt, wobei das wenigstens eine Geschwindigkeitsprofil (43) -ausgehend von einem Grundwert (V₁) ungleich Null mindestens einen anderen Wert (V₃) und dann wieder den Grundwert (V₁) annimmt, so daß das mindestens eine Fördermittel (12 bis 15) ständig Werkstückträger (11) fördern kann, wobei mindestens ein Fördermittel (12 bis 15) mindestens einen Signalgeber (26 bis 28, 30 bis 33) aufweist, dessen Signale auf das mindestens eine Steuergerät (37) einwirken und wobei das Geschwindigkeitsprofil (43) ausgelöst wird, wenn ein Werkstückträger (11) einen Signalgeber (26 bis 28, 30 bis 33) oder eine Position an einer Bearbeitungseinheit (24) erreicht oder wenn eine Bearbeitungseinheit (24) ein Bearbeitungsende meldet.

2. Transportsystem (10) nach Anspruch 1, wobei die mindestens eine Übergabestelle (18 bis 24) eine Bearbeitungseinheit (24) oder eine Knotenstelle (18 bis 21) ist.

3. Transportsystem (10) nach Anspruch 1 oder 2, wobei der mindestens eine Fördermittelantrieb (17) ein Elektromotor (17) ist.

4. Transportsystem (10) nach Anspruch 3, wobei der Elektromotor (17) ein Drehstrommotor (17) ist.

5. Transportsystem (10) nach Anspruch 4, wobei das mindestens eine Steuergerät (37) ein Frequenzumrichter (37) ist.

6. Transportsystem (10) nach Anspruch 5, wobei zwischen Drehstrommotor (17) und dem als Gurtbandförderer ausgebildeten Fördermittel (12 bis 15) ein Getriebe angeordnet ist.

7. Transportsystem (10) nach einem der Ansprüche 1 bis 6, wobei zwischen Signalgeber (26 bis 28, 30 bis 33) und Steuergerät (37) wenigstens eine speicherprogrammierbare Steuerung (35) geschaltet ist.

8. Transportsystem (10) nach einem der Ansprüche 1 bis 7, wobei in Förderrichtung vor einer Nebenförderbahn (13) eine Zubringförderbahn (14) und in Förderrichtung hinter der Nebenförderbahn (13) eine Abführförderbahn (15) angeordnet sind, daß die Nebenförderbahn (13) parallel zu einer Hauptförderbahn (12) angeordnet ist und die Abführförderbahn (15) und die Zubringförderbahn (14) quer an die Hauptförderbahn (12) anschließen und wobei an jeder Knotenstelle (18 bis 21) eine Quertransporteinheit (22) angeordnet ist, die einen Werkstückträger (11) rechtwinklig und unter Beibehaltung seiner Orientierung von einer Förderbahn auf eine andere weitergibt.

9. Transportsystem (10) nach Anspruch 1 oder 2, wobei der mindestens eine Fördermittelantrieb (17) ein elektrischer oder hydraulischer Servoantrieb (17) ist.

## Claims

1. Transport system to guide at least one workpiece carrier (11) to and/or from at least one transfer point (18 to 21, 24) by means of at least one conveying means (12 to 15) constructed as a conveyor belt, in particular a belt conveyor (12 to 15), having at least one conveying means drive (17), one conveying means (12 to 15) in each case being associated with one conveying means drive (17), at least one electronic controller (37) for the at least one conveying means drive (17) generating at least one speed profile (43), the at least one speed profile (43), starting from a basic value (V₁) not equal to zero, assuming at least one other value (V₃) and then the basic value (V₁) again, so that the at least one conveying means (12 to 15) can convey workpiece carriers (11) continually, at least one conveying means (12 to 15) having at least signal generator (26 to 28, 30 to 33), whose signals act on the at least one controller (37), and the speed profile (43) being initiated when a workpiece carrier (11) reaches a signal generator (26 to 28, 30 to 33), or a position on a processing unit (24), or when a processing unit (24) reports the end of processing.

2. Transport system (10) according to Claim 1, the at least one transfer point (18 to 24) being a processing unit (24) or a node (18 to 21).

3. Transport system (10) according to Claim 1 or 2, the at least one conveying means drive (17) being an electric motor (17).

4. Transport system (10) according to Claim 3, the electric motor (17) being a 3-phase motor (17).

5. Transport system (10) according to Claim 4, the at least one controller (37) being a frequency converter (37).

6. Transport system (10) according to Claim 5, a gear mechanism being arranged between the 3-phase motor (17) and the conveying means (12 to 15) constructed as a belt conveyor.

7. Transport system (10) according to one of Claims 1 to 6, at least one programmable logic control system (35) being connected between the signal generator (26 to 28, 30 to 33) and controller (37).

8. Transport system (10) according to one of Claims 1 to 7, a feed conveyor track (14) being arranged upstream of a secondary conveyor track (13) in the conveying direction, and a discharge conveyor track (15) being arranged downstream of the secondary conveyor track (13) in the conveying direction, in that the secondary conveyor track (13) is arranged parallel to a main conveyor track (12) and the discharge conveyor track (15) and the feed conveyor track (14) adjoining the main conveyor track (12) transversely, and there being arranged at each node (18 to 21) a transverse transport unit (22) which passes on a workpiece carrier (11) from one conveyor track to another at right angles and whilst maintaining its orientation.

9. Transport system (10) according to Claim 1 or 2, the at least one conveying means drive (17) being an electric or hydraulic servo drive (17).

## Revendications

1. Système de transport (10) pour recevoir et/ou évacuer au moins un support de pièce (11) à au moins un point de transfert (18-21, 24) à l'aide d'au moins un moyen de transport (12-15) réalisé sous la forme d'une bande transporteuse, notamment d'un convoyeur à bande (12-15) ayant :
- au moins un entraînement de moyen de transfert (17) et un moyen de transport (12-15) avec chaque fois un entraînement de moyen de transport (17) est prévu,
- au moins un appareil de commande électronique (37) génère pour au moins un entraînement de moyen de transfert (17) au moins un profil de vitesse (43), au moins ce profil de vitesse (43), partant d'une valeur de base (V₁) différente de zéro, donne au moins une autre valeur (V₃) et ensuite on revient à la valeur de base (V₁) de sorte qu'au moins un moyen de transfert (12-15) puisse débiter en permanence des supports de pièces (11),
- et au moins un moyen de transfert (12-15) comprend au moins un générateur de signal (26-28, 30-33) dont les signaux agissent sur au moins un appareil de commande (7), et
- le profil de vitesse (43) se déclenche si un support de pièce (11) signale un générateur de signal (26-28, 30-33) ou une position d'une unité de travail (24) atteinte ou si l'unité de travail (24) indique une fin de travail.

2. Système de transport (10) selon la revendication 1,
**caractérisé en ce qu'**
au moins un point de transfert (18-24) est un poste de travail (24) ou un noeud (18-21).

3. Système de transport (10) selon l'une quelconque des revendications 1 ou 2,
**caractérisé en ce qu'**
au moins un entraînement de moyen de transfert (17) est un moteur électrique (17).

4. Système de transport (10) selon la revendication 3,
**caractérisé en ce que**
le moteur électrique (17) est un moteur à courant alternatif (17).

5. Système de transport (10) selon la revendication 4,
**caractérisé en ce qu'**
au moins un appareil de commande (37) est un redresseur de fréquence (37).

6. Système de transport (10) selon la revendication 5,
**caractérisé par**
une transmission entre le moteur à courant alternatif (17) et le moyen de transfert en forme de transporteur à bande (12-15).

7. Système de transport (10) selon l'une quelconque des revendications 1 à 6,
**caractérisé par**
au moins une commande de programme par mémoire (35) entre le générateur de signal (26-28 ; 30-33) et l'appareil de commande (37).

8. Système de transport (10) selon l'une quelconque des revendications 1 à 7,
**caractérisé en ce que**
dans la direction de transfert en amont d'une bande transporteuse auxiliaire (13) on a une bande d'alimentation (14) et dans le sens du débit, en aval de la bande transporteuse auxiliaire (13), on a une bande transporteuse d'évacuation (15),
la bande transporteuse auxiliaire (13) est installée parallèlement à une bande transporteuse principale (12) et
la bande transporteuse d'évacuation (15) et la bande de transfert d'alimentation (14) sont reliées transversalement à la bande transporteuse principale (12) et
à chaque noeud (18-21) on a une unité de transport transversal (22) qui assure le transfert à angle droit et en conservant son orientation à partir de la bande transporteuse vers celle-ci.

9. Système de transport (10) selon l'une quelconque des revendications 1 et 2,
**caractérisé en ce qu'**
au moins un entraînement de moyen de transfert (17) est un servomoteur électrique ou hydraulique (17).
